# EUROPEAN PATENT SPECIFICATION

(11) **EP 2 718 562 B1**
(45) Date of publication and mention of the grant of the patent: **31.08.2016**
(21) Application number: 12740417.6
(22) Date of filing: 05.06.2012
(51) Int. Cl.: F03D 1/00, F03D 13/25, B63B 21/50, B63B 39/06

(54) **OFFSHORE WIND POWER TURBINE**
OFFSHORE-WINDENERGIETURBINE
ÉOLIENNE OFFSHORE

(30) Priority: 07.06.2011 PL 39516311
(43) Date of publication of application: 16.04.2014
(73) Proprietor: Vistal Infrastructure Sp. z o.o., 81-969 Gdynia (PL)
(72) Inventor: RYLKE, Antoni, PL-81-425 Gdynia (PL); ZAWADZKI, Krzysztof, PL-81-594 Gdynia (PL)
(74) Representative: Czabajski, Jacek
(86) International application number: PCT/PL2012/000043
(87) International publication number: WO 2012/169914

(56) References cited:
- EP-A1- 2 221 474
- WO-A1-2011/014075
- WO-A2-2010/093259
- WO-A2-2011/057940
- DE-U1- 20 321 053

## Description

The subject of the invention is an offshore wind power turbine comprising a wind power generator mounted on a support tower, where the whole structure is placed on the water body. The solution relates, in particular, to a wind power turbine floating on the surface of the water body.

For efficient operation, a wind power turbine should be placed in the area with strong, stable winds which should not be disturbed by uneven terrain, vegetation, or buildings. The areas best suited to these conditions are the areas of water bodies with a substantially flat surface and with no objects that would interfere with the flow of air masses. A number of wind power turbines solutions are known which are placed in the areas of water bodies in the form of single power turbines or in the form of wind farms put together from a larger number of single generators. There are two basic types of known solutions, where the first type of solutions are wind power plants with foundations anchored to the bottom of the water body, and the second type are wind power turbines floating on the surface of the water body.

In the known solution of the first type, described in a patent specification No. US 2006/0115363, offshore windmill electric generators are presented. According to this known solution, a support tower of a wind turbine is anchored to the bottom of the water body, so this is the first type of solutions. It comprises a windmill electric generator situated on the tower. The invention provides for the use of an intermediate element between the windmill's nacelle and the tower. The intermediate element contains a levelling device or a vibration damping device, or both.

Another known solution of the first type, described in a patent specification US 2005/0163616, presents a method of erecting a wind turbine, a wind turbine foundation and a wind turbine assembly. This solution relates to a turbine with foundations anchored to the bottom of the sea. For positioning in a specific location according to the above method, in the first step a foundation is provided comprising a body and a pre-fitted upper attachment means, vibration damping means at least to part of the foundation by transferring vibrations into the foundation structure. The invention provides for erecting at least one wind turbine comprising a vibration arrangement enabling a transfer of vibrations into the foundation. According to this known invention, large scale wind turbines, especially offshore wind turbines, can be transported and erected at the place of destination.

Another solution of the first type, known from a patent specification No. US 2011/0006538, presents a monopile foundation for an offshore wind energy turbine and this solution relates to a method for installing an offshore wind turbine. According to this known solution, the method comprises the steps of establishing a substructure at the bottom of the water body, comprising at least one pile extending upwards, where the said at least one pipe is part of a primary structure of the substructure, establishing a support of a secondary structure. This secondary structure is mounted with its fittings to the primary structure. The said fittings of the secondary structure are preferably established by welding or bolting, and they are not parts of the said pile of the primary structure, or parts of the primary structure. The method may alternatively comprise the steps of erecting a wind turbine tower to the pile being part of the primary structure. The secondary structure may be mounted on an intermediate structure between the pile of the primary structure and the wind turbine tower. Even in this alternative solution, the method may comprise the steps of mounting the secondary structure to at least one intermediate tubular section being part of the primary structure. The described solution is a wind turbine mounted on a solid foundation at the bottom of the water body. However, it is designed so as to enable the removal of the wind tower, for example, for routine maintenance or repair of the generator, and its further erecting on the pile directly, or via an intermediate tubular section.

A known solution of the second type, related to erecting more than one generator on the surface of the water body is presented in a U.S. patent specification No. US 2008/0272605. This solution involves a system of a floating wind power plant, capturing and converting and storing wind energy in the form of a vessel adapted to receive at least one wind turbine and a device for converting this energy to the energy which is capable of being stored and transmitted. A method of adapting a vessel, such as a container ship or an oil tanker, for use as an offshore wind power plant comprises equipping a vessel with devices for capturing a renewable energy source, optimal positioning the vessel at sea, converting the renewable energy to a storable energy source. Then, the converted energy is stored and the vessel is repositioned to a new position of the wind turbine operation or the obtained energy is transmitted to consumers. In the embodiment according to this solution, three wind power plants are erected on the vessel.

Another known solution of the second type is presented in a patent specification of the international application No. WO 2010/093259. According to this known solution, an offshore wind turbine comprises a floating docking station and a shaft to which a windmill generator unit is mounted. The shaft is removably attached to the docking station. The whole is in electrical connection to an onshore facility. The shaft comprises part of the surface for connection to the cooperating interface of the docking station. The connection member is a structure comprising a plurality of teeth cooperating with slots arranged on inside walls of a receiving opening in the docking station. According to this solution, the docking station comprises a hollow body with air-filled compartments. The shaft of the power station also contains one or more compartments in the underwater section. The lowest compartment of the shaft of the wind turbine contains ballast material and wherein one or more of the tower compartments arranged above comprise air-filled compartments arranged to provide buoyancy to the turbine unit. The compartments are arranged such that sea water may be pumped into or out in order to regulate the buoyancy, and thereby to keep the vertical position of the turbine shaft in relation to the surface of water. The connection of the shaft and the docking station is accomplished by raising the turbine shaft in relation to the surface of water until the shaft's connection member enters into a U-shaped receiving opening of the docking station and connects with its interface, and then the shaft is lowered until it enters into the receiving opening of the docking station. The interface of the docking station and the shaft is arranged above the surface of water and the receiving opening of the docking station is open atop to receive the designated interface of the wind turbine shaft and the docking station.

The known manner of mounting a floating wind turbine presented in WO 2010/093259, involves delivering and anchoring a floating docking station and delivering the wind power turbine shaft with a generator unit to the site. The shaft keeps a vertical position on the surface of the water owing to air-filled compartments and lower ballast. The docking station is anchored at a desired location. Then, the wind turbine shaft is entered into a U-shaped receiving opening of the docking station, and water is pumped into other air-filled compartments of the wind turbine shaft instead of the air, and consequently the turbine shaft is lowered and its interface is placed in the surface of the receiving opening of the docking station. The shaft and the docking station is a unit floating on the water.

In another known solution of the second type, presented in a patent specification No. US 2004/0169376, another design of an offshore, floating wind turbine and a method for making the same is described. This known solution relates to a wind generator installed offshore, in particular at sea, to support structures forming part of wind generators and to methods of making and installing such wind power plants on the water body. The field of the invention is that of making, transporting and installing wind generators for producing electricity, more particular offshore, and in large numbers, so as to form wind farms. The wind power turbine according to the invention comprises a wind turbine mounted on a telescopic pylon and supports supporting the turbine, and ballast supporting the pylon in a vertical position. Therefore, this known solution is a floating device. A docking station on which the power turbine is mounted is below the water level and is hung on floats situated above the docking station.

According to the invention, an offshore wind power turbine comprises a floating, anchored base and a floating tower with a wind generator unit. The wind generator tower is detachably connected to the floating base. The whole power turbine is connected to an electricity reception system. The tower body comprises part of an outer surface cooperating with a work surface of a U-shaped receiving opening created in the floating base. The receiving opening and the tower body are equipped with elements enabling the connection of the two units after mounting the tower in the floating base. At the bottom the tower body is equipped with at least one internal buoyancy compartment equipped with a water filling and emptying system with filling with the air. Below this at least one buoyancy compartment, the tower body contains a ballast compartment filled with permanent ballast. The floating base also contains at least one internal buoyancy compartment equipped with a water filling and emptying system with the simultaneous filling with the air.

According to the invention, an offshore wind power turbine is characterised in that the U-shaped receiving opening of the floating base comprises an inner conical surface convergent towards the top of the tower body of the wind turbine. However, the tower body of the wind turbine comprises an area of an outer conical surface convergent towards the top of the tower body. Both conical surfaces, inner of the receiving opening and outer of the tower body, correspond to each other and in an operating position cooperate with each other. The base contains a shape connection, situated near the bottom edge of the receiving opening, cooperating with a complementary shape connection of the tower body of the wind turbine.

According to the invention, a shaped connection of the receiving opening comprises at least one recess situated on the lower peripheral edge of the U-shaped receiving opening. A shape connection of the tower is a complementary shape member of the said recess of the U-shaped receiving opening in the base.

An embodiment of the invention provides that there are three shape connections on the perimeter of the U-shaped receiving opening of the floating base and on the perimeter of the wind turbine tower.

The floating base is connected to anchoring elements by means of at least one strand.

According to the invention, a strand may be an anchor chain.

In a preferred version of the invention, the floating base is connected to anchoring elements by means of three strands.

In an embodiment according to the invention, the tower body of the wind turbine can be equipped in the underwater section with plates damping the sway of the tower.

The plates damping the sway of the tower are mounted to the tower body of the wind turbine below the bottom edge of the floating base.

Damping plates can be mounted in at least one perpendicular plane and in at least one plane parallel to the longitudinal symmetry axis of the tower body of the wind power plant.

In a preferred embodiment of the invention, damping plates mounted in planes parallel to the longitudinal symmetry axis of the tower body of the wind power turbine are connected to a ballast compartment of this tower.

In an embodiment according to the invention, a new design of connection of the floating base to the tower body of the wind power turbine is proposed. A shape connection in the form of a recess in the base and a complementary projection in the tower body is situated, as opposed to the previously known solutions, on the bottom edge of the floating base. Also in the floating base an abutment surface in the shape of an inner cone convergent towards the top of the tower of the wind turbine is proposed. A cooperating part of the surface the body tower of the power plant has the shape of a complementary outer cone also convergent towards the top of the tower body of the wind power plant. In embodiments of the prior art, conical surfaces have been used, but the cone in both cooperating members has been divergent towards the top of the tower of the wind turbine.

In the previously known solutions, an abutment surface has been situated at the bottom of the receiving opening of the base and the said abutment conical surface has been a cone convergent towards the base plate of the tower body, and a shape connection has been situated near the top edge of the base.

According to the invention, a new design an offshore wind turbine is proposed. The method involves, entering the tower body into the base, and then to buoyancy compartments of the tower body, situated below the water surface, the air is provided instead of water. Through gradual surfacing the tower body, abutment surfaces of the base and the tower body, including complementary conical surfaces of the tower and the base are brought to contact. At the same time, when the tower surfaces, shape projections of the tower body are entered at the bottom into recesses in the bottom edge of the base. In the previously known method of erecting a wind power turbine, the tower is entered into the base, and then through gradual filling of underwater buoyancy compartments of the tower with water, the tower body is lowered until it is erected from the top in the receiving opening of the floating base. The method according to the invention allows, in parallel during mounting the tower, to achieve technologically required stress of anchoring strands.

The subject of the invention is presented in the embodiment in the accompanying figures, wherein:
- Fig. 1: - is a view of a wind turbine according to the invention,
- Fig. 2: - is an A-A cross-section of a wind turbine by a plane perpendicular to the longitudinal symmetry axis of the tower in the place of erecting the tower in a floating receiving opening,
- Fig. 3: - is a B-B cross-section of a buoyancy compartment of the tower, below a floating receiving opening.

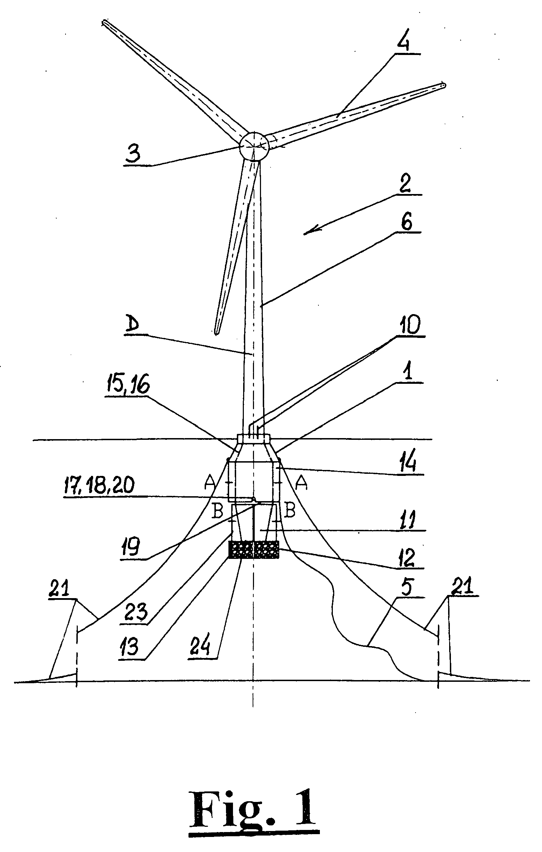

As shown in the attached Fig. 1, an offshore wind power turbine comprises a floating, anchored base 1 and a floating tower 2 with a wind generator unit 3 driven by a windmill 4. The tower 2 of the wind generator 3 is detachably connected to the floating base 1. The whole power plant is connected with the use of an underwater cable 5 to an electricity reception system. The tower 2 body 6 comprises part 7 of an outer surface cooperating with a work surface 9 of a U-shaped receiving opening 8 created in the floating base 1. The receiving opening 8 and the tower 2 body 6 are equipped with members 10 enabling the connection of the tower 2 to the base 1 after mounting the tower 2 in the floating base. The tower 2 body 6 in the lower part is equipped below the water surface with one internal buoyancy compartment 11. The buoyancy compartment 11 is equipped with a known, not shown in the figure, water filling and emptying unit with simultaneous filling this compartment 11 with the air. Below the buoyancy compartment 11 the tower 2 body 6 contains a ballast compartment 12 filled with permanent ballast 13. The floating base 1 contains its own internal buoyancy compartment 14 equipped with a known water filling and emptying unit with simultaneous filling this compartment 14 with the air. In the embodiment shown in the attached Fig. 1, the tower 2 and the base 1 contain one buoyancy compartment 11, 14 each. However, other embodiments do not exclude a division of the interior of the tower 2 and the interior of the base 1 with internal separators into more buoyancy compartments 11, 14 with a system of independent or sequential filling and emptying these compartments.

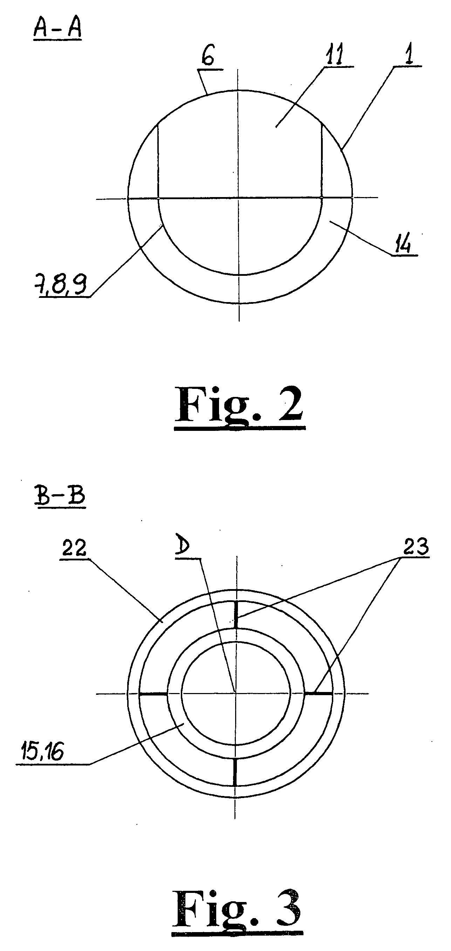

Fig. 2 shows a cross-section of the U-shaped receiving opening 8 of the floating base 1 by a plane perpendicular to the longitudinal symmetry axis of the tower 2. Fig. 1 shows that the receiving opening 8 comprises an area of an inner conical surface 15 convergent towards the top of the tower 2 body 6 of the wind turbine. However, the tower 2 body 6 of the wind turbine comprises an area of an outer conical surface 16 convergent towards the tower 2 body 6. Both conical surfaces 15,16 of the opening receiving 1 and the tower 2 body 6 correspond to each other and in an operating position cooperate with each other. The base 1 includes a shape connection 17 situated near the bottom edge of the receiving opening. This is shown in Fig. 1.

A shape connection 17 comprises at least one recess 18 situated on the lower peripheral edge 19 of the base. However, the tower 2 body 6 of the wind power plant includes a shape member 20, complementary to the said recess 18 in the base 1. Other embodiments do not exclude other types of a shape connection 17 that that shown in Fig. 1. In this embodiment on the perimeter of the U-shaped receiving opening 8 of the floating base 1 and on the perimeter of the tower 2 body 6 of the wind turbine there are three shape connections 17.

Fig. 1 shows the floating base 1 connected to anchoring elements, not shown in the figure, by means of strands in the form of anchor chains 21. The figure shows two anchor chains 21, but in this embodiment the base 1 also contains the third anchor chain not shown in the figure. Other embodiments do not exclude the use of a different number of anchor chains 21.

Fig. 1 and Fig. 2 show that the tower 2 body 6 of the wind turbine, according to the invention, is equipped in the underwater section with plates damping 22, 23 the sway of the tower.

Damping plates 22,23, as shown in Fig. 1 and Fig. 3, are mounted to the tower 2 body 6 of the wind turbine below the bottom edge 19 of the floating base 1. A damping plate 22 is mounted to the tower 2 body 6 below the base 1 in a plane perpendicular to the symmetry axis D of the tower 2 body 6. The same figures show four consecutive damping plates 23 that are mounted to the tower 2 body 6 below the base 1, in two planes parallel to the longitudinal symmetry axis D of the tower 2 body 6 of the wind turbine. As shown in Fig. 1, damping plates 23 mounted in planes parallel to the longitudinal symmetry axis D of the tower 2 body 6 of the wind turbine are connected to a ballast compartment 12 of this tower 2 and provide an additional attachment of this ballast compartment 12 to the tower 2 bottom 24.

The method of erecting an offshore wind turbine involves delivering and anchoring a floating U-shaped base 1 at the place of destination. Then, a floating tower 2 of a wind turbine is delivered to the place of destination and entered into the U-shaped receiving opening 8 of the base 1. After entering a vertical tower 2 body 6 into the U-shaped receiving opening 8 of the base 1, the height of part of the interface 7 of the tower 2 body 6 of the wind turbine with the work surface 9 of the receiving opening 8 inside the U-shaped base 1 changes. By raising the tower 2 body 6, part of the tower 2 body 6 of the wind turbine is mounted in the floating U-shaped base 1. According to the presented embodiment, before entering the tower 2 body 6 into the receiving opening 8 of the base 1, water is pumped into buoyancy compartments 11 of the tower 2 body 6 to lower the tower 2, and after entering the tower 2 body 6 of the wind turbine into the receiving opening 8 of the floating base 1, buoyancy compartments 11 of the tower 2 body 6 are emptied of water and filled with the air, which results in raising the tower 2 body 6 and then the contact of the work surface of the opening receiving 8 of the floating base 1 and the corresponding work surface of the tower 2 body 6 of the wind turbine is obtained. An outer conical surface 16 convergent towards the top of the tower 2 is in the receiving opening 8 of the floating base 1, inside the inner cone of this receiving opening 8 and with further raising the tower 2 body 6 as.a result of pumping the air into buoyancy compartments 11 and pumping water out of them, the tower 2 body 6 is mounted in the conical inner receiving opening 8 of the base 1. After obtaining the contact of work surfaces 7, 9, lower shape connections of the tower 2 body 6 and the base 1 are connected, and then the tower 2 body 6 is connected to the floating base 1 by means of fastener members 10.

During connection of the tower 2 to the base 1 involving raising the tower 2 in the first stage and slight raising the whole connected structure of the wind power plant in the second stage, there is a positive phenomenon of reducing the slack of anchor chains 21 determining the position of the wind power turbine unit according to the invention on the water surface. A wind turbine according to the invention can be also used in other bodies of water than sea areas.

### The list of designations in the figures

- 1.: Floating base.
- 2.: Tower.
- 3.: Generator.
- 4.: Windmill.
- 5.: Underwater cable.
- 6.: Tower body.
- 7.: Working part of the tower body.
- 8.: U-shaped receiving opening.
- 9.: Working surface of the receiving opening.
- 10.: Fastener member.
- 11.: Buoyancy compartment of the tower.
- 12.: Ballast compartment.
- 13.: Permanent ballast.
- 14.: Buoyancy compartment of the base.
- 15.: Inner conical surface of the receiving opening.
- 16.: Outer conical surface of the tower body.
- 17.: Shape connection.
- 18.: Recess of the shape connection.
- 19.: Bottom edge of the base.
- 20.: Shape member of the tower body.
- 21.: Anchor chain.
- 22.: Damping plate.
- 23.: Damping plate.
- 24.: Tower bottom.
- D.: Longitudinal symmetry axis of the tower.

## Claims

1. Offshore wind power turbine comprising a floating, anchored base and a floating tower with a wind generator unit, where the tower is detachably connected to the floating base, and the whole power turbine is connected to an electricity reception system, and the tower body (6) comprises an outer conical surface (16) cooperating with an inner conical work surface (15) of a U-shaped receiving opening of the floating base, where the receiving opening and the tower body are equipped with fastener members, where the base contains at least one receiving opening of a shape connection (17) cooperating with a complementary shape member (20) of the tower body of the wind turbine, where the tower body at the bottom, under at least one internal buoyancy compartment (11) equipped with a water filling and emptying system, contains a ballast compartment, and the floating base contains at least one internal buoyancy compartment equipped with a filling and emptying system, **characterised in that**, the inner conical surface (15) of the U-shaped receiving opening of the base (1) is convergent towards the top of the tower (2) of the wind turbine, where the area of the cooperating outer conical surface (16) of the tower (2) is convergent towards to the top of the tower (2) body (6) of the wind turbine, where the base (1) contains situated near the bottom edge (19) the at least one receiving opening of the shape connection (17), cooperating with a complementary shape member (20) of the tower (2) body (6) of the wind turbine, where the shape connection (17) of the receiving opening comprises at least one recess (18) situated in the bottom peripheral edge (19) of the base (1), and a shape member (20) of the tower (2) body (6) is a complementary member of the recess (18) of the base (1).

2. Offshore wind power turbine, according to claim 1, **characterised in that** on the perimeter of the U-shaped receiving opening (8) of the floating base (1) and on the perimeter of the tower (2) of the wind turbine there are three shape connections (17).

3. Offshore wind power turbine, according to claim 1, **characterised in that** the floating base (1) is connected with anchoring elements by means of at least one strand.

4. Offshore wind power turbine, according to claim 3, **characterised in that** the floating base (1) is connected with anchoring elements by means of three strands.

5. Offshore wind power turbine, according to claim 1, **characterised in that** the tower (2) body (6) of the wind turbine is equipped in the underwater section with damping plates (22,23).

6. Offshore wind power turbine, according to claim 5, **characterised in that** the damping plates (22,23) are mounted to the tower (2) body (6) of the wind turbine below the bottom edge (19) of the floating base (1).

7. Offshore wind power turbine, according to claim 5 or 6, **characterised in that** the damping plates (22,23) are mounted in at least one plane perpendicular and at least one plane parallel to the longitudinal symmetry axis (D) of the tower (2) body (6) of the wind power plant.

8. Offshore wind power turbine, according to claim 7, **characterised in that** the damping plates (23) mounted in planes parallel to the longitudinal symmetry axis (D) of the tower (2) body (6) of the wind power plant are connected to the ballast compartment (12) of the tower (2).

## Patentansprüche

1. Offshore-Windenergieturbine, umfassend ein schwimmendes, verankertes Basisteil und einen schwimmenden Turm mit einem Windgenerator-Satz, wobei der Turm mit dem schwimmenden Basisteil lösbar verbunden ist, wobei die ganze Windenergieturbine mit einem Stromabnahmesystem verbunden ist, wobei der Turmkörper (6) eine kegelförmige Außenfläche (16) aufweist, welche mit einer kegelförmigen, inneren Arbeitsfläche (15) eines halboffenen Sitzelements des schwimmenden Basisteils kompatibel ist, wobei der Turmkörper und das Sitzelement mit Verbindungselementen ausgestattet sind, wobei das Basisteil wenigstens ein Sitzelement einer formschlüssigen Verbindung (17) beinhaltet, welches mit einer ergänzenden formschlüssigen Verbindung (20) des Turmkörpers der Windturbine kompatibel ist, wobei der Turmkörper in einem unteren Teil unter wenigstens einem inneren, mit einem Befüll- und Entleerungs-System ausgestatteten Verdrängungsraum (11) eine Ballastkammer enthält, wobei das schwimmende Basisteil wenigstens einen inneren Verdrängungsraum beinhaltet, welcher mit einem Befüll- und Entleerungs-System ausgestattet ist, **dadurch gekennzeichnet, dass** die kegelförmige Innenfläche (15) des halboffenen Sitzelements des Basisteils (1) sich in Richtung Spitze des Turms (2) der Windturbine verjüngt und dass eine Zone der kegelförmigen Außenfläche (16) des Turms (2) sich in Richtung Spitze des Körpers (6) des Turms (2) der Windturbine verjüngt, wobei das Basisteil (1) wenigstens ein neben einer Unterkante (19) angeordnetes Sitzelement der formschlüssigen Verbindung (17) beinhaltet, welches mit dem ergänzenden Formelement (20) des Körpers (6) des Turms (2) der Windturbine kompatibel ist, wobei die formschlüssige Verbindung (17) des Sitzelements wenigstens eine, an der umlaufenden Unterkante (19) des Basisteils (1) angeordnete Aussparung (18) aufweist, wobei das Formelement (20) des Körpers (6) des Turms (2) ein Ergänzungselement der Aussparung (18) des Basisteils (1) bildet.

2. Offshore-Windenergieturbine nach Anspruch 1, **dadurch gekennzeichnet, dass** am Umfang des halboffenen Sitzelements (8) des schwimmenden Basisteils (1) und am Umfang des Turms (2) der Windturbine sich drei formschlüssige Verbindungen (17) befinden.

3. Offshore-Windenergieturbine nach Anspruch 1, **dadurch gekennzeichnet, dass** das schwimmende Basisteil (1) mit Hilfe von wenigstens einem Zugmittel mit Verankerungselementen verbunden ist.

4. Offshore-Windenergieturbine nach Anspruch 3, **dadurch gekennzeichnet, dass** das schwimmende Basisteil (1) mit Hilfe von drei Zugmittel mit Verankerungselementen verbunden ist.

5. Offshore-Windenergieturbine nach Anspruch 1, **dadurch gekennzeichnet, dass** der Körper (6) des Turms (2) der Windturbine in einem Unterwasser-Teil mit Dämpfungsplatten (22,23) ausgestattet ist.

6. Offshore-Windenergieturbine nach Anspruch 5, **dadurch gekennzeichnet, dass** die Dämpfungsplatten (22,23) am Körper (6) des Turms (2) der Windturbine unterhalb der Unterkante (19) des schwimmenden Basisteils (1) befestigt sind.

7. Offshore-Windenergieturbine nach Anspruch 5 oder 6, **dadurch gekennzeichnet, dass** die Dämpfungsplatten (22,23) in wenigstens einer senkrechten Ebene und in wenigstens einer parallelen Ebene zur Längssymmetrieachse (D) des Körpers (6) des Turms (2) der Windenergieturbine befestigt sind.

8. Offshore-Windenergieturbine nach Anspruch 7, **dadurch gekennzeichnet, dass** die Dämpfungsplatten (23), welche in parallelen Ebenen zur Längssymmetrieachse (D) des Körpers (6) des Turms (2) der Windenergieturbine befestigt sind, mit einer Ballastkammer (12) des Turms (2) verbunden sind.

## Revendications

1. Éolienne offshore contenant un élément flottant socle, ancré au fond et une tour flottante avec un groupe générateur éolien; la tour est fixée d'une façon amovible à l'élément flottant socle, et l'ensemble d'éolienne est branché au système de reception de l'énergie électrique et le corps de la tour (6) contient une surface externe conique (16) coopérante avec une surface interne conique de travail (15) du siège semi-ouvert de l'élément flottant socle cependant le corps de la tour et le siège sont munis d'éléments de connection tandis que l'élément socle contient au moins un siège de l'assemblage forme (17) coopérant avec l'assemblage forme complémentaire (20) du corps de la tour de la turbine éolienne, où le corps de la tour, dans la partie inférieure sous au moins une chambre interne de flottaison (11) est munie d'un système de remplissage et vidange, contient une chambre à ballast tandis que l'élément flottant socle contient au moins une chambre interne de flottaison munie d'un système de remplissage et vidange, **caractérisée en ce que** la surface interne conique (15) du siège semi-ouvert de l'élément flottant socle (1) est convergente dans le sens du sommet de la tour (2) de la turbine éolienne, et **en ce que** la zone de la surface externe conique (16) de la tour (2) est convergente dans le sens du sommet du corps (6) de la tour (2) de la turbine éolienne, alors que l'élément socle (1) contient, au bord inférieur (19) au moins un siège de l'assemblage forme (17), coopérant avec l'élément forme complémentaire (20) du corps (6) de la tour (2) de la turbine éolienne (17) alors que l'assemblage forme complémentaire contient au moins un enfoncement (18) situé sur le bord inférieur périphérique (19) de l'élément socle (1), et l'élément forme (20) du corps (6) de la tour (2) constitue l'élément complétant l'enfoncement (18) de l'élément socle (1)

2. Éolienne offshore selon la revendication 1, **caractérisée en ce que,** sur le périmètre du siège semi-ouvert (8) de l'élément flottant socle (1) et sur le périmètre de la tour (2) de la turbine éolienne se trouvent trois assemblages formes (17).

3. Éolienne offshore selon la revendication 1, **caractérisée en ce que** l'élément flottant socle (1) est attaché aux éléments d'encrage à l'intermédiaire d' au moins un hauban.

4. Éolienne offshore selon la revendication 3, **caractérisée en ce que** l'élément flottant socle (1) est attaché aux éléments d'encrage à l'intermédiaire de trois haubans.

5. Éolienne offshore selon la revendication 1, **caractérisée en ce que** le corps (6) de la tour (2) de la turbine éolienne est muni, dans la partie immergée, de panneaux d'amortissement (22,23).

6. Éolienne offshore selon la revendication 5, **caractérisée en ce que** les panneaux d'amortissement (22,23) sont fixés au corps (6) de la tour (2) de la turbine éolienne au-dessous du bord inférieur (19) de l'élément flottant socle (1).

7. Éolienne offshore selon la revendication 5 ou 6, **caractérisée en ce que** les panneaux d'amortissement (22,23) sont fixés au moins dans une surface perpendiculaire et au moins dans une surface parallèle à l'axe de symétrie longitudinale (D) du corps (6) de la tour (2) d'éolienne.

8. Éolienne offshore selon la revendivation 7, **caractérisée en ce que** les panneaux d'amortissement (22,23) fixés dans les surfaces parallèles à l'axe de symétrie longitudinale (D) du corps (6) de la tour (2) d'éolienne sont liés à la chambre à ballast (12) de cette tour (2).
